# EUROPEAN PATENT SPECIFICATION

(11) **EP 3 370 059 B1**
(45) Date of publication and mention of the grant of the patent: **15.12.2021**
(21) Application number: 17000318.0
(22) Date of filing: 01.03.2017
(51) Int. Cl.: G01N 21/64, G01N 21/77

(54) **OPTICAL SENSOR FOR ANALYZING BIOLOGICAL AGENTS AND METHOD OF ITS MANUFACTURE**
OPTISCHER SENSOR ZUR ANALYSE BIOLOGISCHER ARBEITSSTOFFE UND VERFAHREN ZU DESSEN HERSTELLUNG
CAPTEUR OPTIQUE POUR L'ANALYSE D'AGENTS BIOLOGIQUES ET SON PROCÉDÉ DE FABRICATION

(43) Date of publication of application: 05.09.2018
(73) Proprietor: Ruhr-Universität Bochum, 44801 Bochum (DE)
(72) Inventor: Saetchnikov, Anton, 44801 Bochum (DE); Saetchnikov, Vladimir, 220007 Minsk (BY); Tcherniavskaia, Elina, 220007 Minsk (BY); Ostendorf, Andreas, 49509 Recke (DE)
(74) Representative: Cohausz Hannig Borkowski Wißgott

(56) References cited:
- SAETCHNIKOV VLADIMIR A ET AL: "Array sensor: plasmonic improved optical resonance methods and instrument for biomedical diagnostics", PROGRESS IN BIOMEDICAL OPTICS AND IMAGING, SPIE - INTERNATIONAL SOCIETY FOR OPTICAL ENGINEERING, BELLINGHAM, WA, US, vol. 9540, 17 July 2015 (2015-07-17), pages 954005-954005, XP060056442, ISSN: 1605-7422, DOI: 10.1117/12.2183675 ISBN: 978-1-5106-0027-0
- JUSHUAI WU ET AL: "Rapid 3D micro-printing of optical whispering-gallery mode resonators", 2015 IEEE 15TH INTERNATIONAL CONFERENCE ON NANOTECHNOLOGY (IEEE-NANO), IEEE, 27 July 2015 (2015-07-27), pages 1271-1273, XP032853810, DOI: 10.1109/NANO.2015.7388862 [retrieved on 2016-01-20]
- SAETCHNIKOV VLADIMIR A ET AL: "Classification of the micro and nanoparticles and biological agents by neural network analysis of the parameters of optical resonance of whispering gallery mode in dielectric microspheres", NOVEL BIOPHOTONIC TECHNIQUES AND APPLICATIONS, SPIE, 1000 20TH ST. BELLINGHAM WA 98225-6705 USA, vol. 8090, no. 1, 9 June 2011 (2011-06-09) , pages 1-11, XP060015259, DOI: 10.1117/12.889574 [retrieved on 1901-01-01]
- HOPE T. BEIER ET AL: "Modeling whispering gallery modes in quantum dot embedded polystyrene microspheres", JOURNAL OF THE OPTICAL SOCIETY OF AMERICA - B., vol. 27, no. 3, 1 March 2010 (2010-03-01), pages 536-4788, XP055398043, US ISSN: 0740-3224, DOI: 10.1364/JOSAB.27.000536

## Description

The invention relates to the technical field of optical microsensors for analyzing biological agents or compounds with biological agents by interpretation of spectral changes in order to determine the nature and in particular presence or absence of a particular biomolecule.

In particular, the present invention relates to an optical microsensor for interpretation of characteristics of biological agents and for identification of a biological agent in a fluidic environment using spectral changes of whispering gallery modes and/ or changes of a fluorescence spectrum depending on the biological agent to be identified, the sensor comprising an array of sensor cells formed by a plurality of wells within a frame structure arranged on a glass substrate, the frame structure being covered by a glass plate so that each sensor cell is bordered to every side, and each sensor cell comprising at least one optical microresonator. Furthermore, the present invention relates to a method of manufacturing said optical sensor as well a method of use of said optical microsensor.

An optical microsensor similar to the afore-mentioned kind as well as a method of its manufacturing is presented in "SAETCHNIKOV VLADIMIR A ET AL: "Array sensor: plasmonic improved optical resonance methods and Instrument for biomedical diagnostics", PROGRESS IN BIOMEDICAL OPTICS AND IMAGING, SPIE - INTERNATIONAL SOCIETY FOR OPTICAL ENGINEERING, BELLINGHAM, WA, US, vol. 9540, 17 July 2015 (2015-07-17), pages 954005-954005, ISSN: 1605-7422, DOI: 10.1117/12.2183675, ISBN: 978-1-5106-0027-0".

Fast, reliable and comprehensive analysis of biological compounds to determine existence or absence of the one or other biomolecule like, for example, a nucleic acid or a protein, is an important problem in the art, as indicated in the publication mentioned above as well as in "SAETCHNIKOV VLADIMIR A ET AL: "Classification of the micro and nanoparticles and biological agents by neural network analysis of the Parameters of optical resonance of whispering gallery mode in dielectric microspheres", NOVEL BIOPHOTONIC TECHNIQUES AND APPLICATIONS, SPIE, 1000 20TH ST. BELLINGHAM, WA 98225-6705 USA, vol. 8090, no. 1, 9 June 2011 (2011 -06-09), pages 1-11, DOI: 10. 1117/12.889574.

Usually, optical microsensors with a cluster of microresonators are used within which optical cavity mode excitation is provoked. Optical cavity mode excitation is based on confinement of light inside a microresonator recirculation along a certain path with a certain resonance frequency. Here, so called Fabry-Perod modes (FPMs) and so called whispering gallery modes (WGMs) exist. FPMs have a light recirculating path corresponding to the diameter of the microresonators so that two opposing inner surfaces of the microresonator act as mirrors reflecting the light back to each other. The resonators are also called cavities or microcavities, conventionally formed by glass (fused silica) beats having a spherical shape with a diameter between 90µm and 120µm. WGMs travel circumferentially along the inner surface of the microresonators based on total internal reflection. This is why a circular, in particular rotation- symmetric/ shape of the microresonator in the light propagation direction is necessary to excite WGMs. Population of WGMs is possible at multiple specific frequencies, i.e. resonance frequencies, as far as the inner circumference of the microresonator equals an integer multiple of the light wavelength. All WGM frequencies considered as a whole form a certain cavity mode spectrum, in particular a WGM spectrum.

Different approaches to analyze biological compounds using optical microsensors exist one approach of which is detecting the change of the optical path length due to adsorption of specifically binding molecules to the microresonator. Another approach is to detect a change of the so called quality factor (Q-factor) of the resonators due to the presence of the biological compound in the vicinity of the microresonator. A further approach is to use the cavity mode spectrum as a fingerprint of a specific compound or mixture based on a comparison of the measured cavity mode spectrum with a plurality of known spectral fingerprints. This approach is based on the effect that the presence of certain biomolecules on the outer surface of the microresonator alters the wavelength of the cavity mode as the light travelling path is radially enlarged into the region on the outer surface where the certain biomolecules adhere. Thus, the individual resonance frequencies are shifted and their magnitude altered more or less, leading to an individual new spectral fingerprint that can be compared with stored cavity mode spectra in order to find one matching with the observed one.

A similar approach to which the present invention relates is to detect and analyze the relative resonance spectral changes due to the presence of a certain biomolecule. Here, coating the outer surface of the resonator with a molecule specific coupling agent may ensure that only said certain biomolecules to be detected couples to the outer surface of the resonator. If this happens, the coupling agent - biomolecule connection at the surface of the microresonators effects a radial extension of the light travelling path so that a frequency change of the whispering gallery modes can be observed after exposing the microresonators to the biological sample, in particular in comparison to the WGM spectrum before the sample had been provided. This change is a clear hint to the existence of a particular biomolecule that is expected to couple with the coupling agent.

The publication "JUSHUAI WU ET AL: "Rapid 3D micro-printing of optical whispering gallery mode resonators", 2015 IEEE 15TH INTERNATIONAL CONFERENCE ON NANOTECHNOLOGY (IEEE-NANO), IEEE, 27 July 2015 (2015-07-27), pages 1271-1273, DOI: 10.1109/NAN0.2015.7388862" proposes the production of disk shaped whispering gallery mode resonators having a diameter of 460µm by means of 3D printing a polymer on a substrate.

The publication "HOPE T. BEIER ET AL: "Modeling whispering gallery modes in quantum dot embedded polystyrene microspheres", JOURNAL OF THE OPTICAL SOCIETY OF AMERICA - B., vol. 27, no. 3, 1 March 2010 (2010-03-01), pages 536-4788, US, ISSN: 0740-3224, DOI: 10.1364/JOSAB.27.000536 presents a method to enhance the quality factor of spherical whispering gallery mode resonators.

The object of the present invention is to provide an improved optical microsensor that can be easily manufactured and that has excellent performance enabling a user to apply many different techniques alternatively or even simultaneously to interpret characteristics of biologicals agents and to identify the nature of the biological agent. A further object of the present invention is to provide a method for manufacturing said optical sensor as well as a method of use of the sensor.

This object is solved by an optical sensor having the features of claim 1, a method for manufacturing as claimed in claim 10 and a method of use according to claim 15. Advantageous developments of the microsensor, its method of manufacturing and the method of use are given in the subclaims and will be described in the following.

According to the present invention it is proposed an optical microsensor for interpretation of characteristics of biological agents and for identification of a biological agent in a fluidic environment using spectral changes of whispering gallery modes and/ or changes of a fluorescence spectrum depending on the biological agent to be identified, the sensor comprising an array of sensor cells formed by a plurality of wells within a frame structure arranged on a glass substrate, the frame structure being covered by a glass plate so that each sensor cell is bordered to every side, and each sensor cell comprising at least one optical microresonator each of which having a predetermined size, shape and position with regard to the cell borders of the respective well and in that the microresonators are additively manufactured from photosensitive polymer material. Hence, the microresonators are each arranged at a predetermined position with regard to the cell borders of the respective well by means of said additive manufacturing using photosensitive polymer material. With the microresonators all having a predetermined size, shape and position with regard to the cell borders, the optical properties of the microsensor can exactly be defined and are known so that the analysis of a biological agent is more precise and uncertainty in identification of the biological agent is significantly reduced.

Preferably, the microresonators are manufactured by direct laser writing the photosensitive polymer material. This ensures to get a precise position, shape and size of the microresonators with accuracy in the area of +/- a few tens nanometers. Thus, manufacturing resolution and consequently, optical quality of resonators is increased. Here, direct laser writing can be performed, for example, by means of two photon polymerization. This has the advantage that the microresonators can be fixed without adhesive on the substrate so that they have direct contact to the substrate. Thus, inhomogeneous optical properties amongst the microresonators due to varying adhesive thickness between a microresonator and the substrate as well as imprecise positioning as consequence of using adhesive are eliminated.

According to a preferred embodiment the frame structure consists of one or more layers generated layer-wise on the substrate by means of an additive manufacturing technique wherein the wells are formed by leaving certain areas on the substrate free of material forming the frame structure. Here, a 3D printing technique can be applied. This is a fast and cost efficient way to generate the frame structure. Preferably, the frame structure is made of a fused polymer.

In order to stimulate whispering gallery modes, the microresonators should have a circular shape in the light propagation direction. For example, the shape of a cylinder is preferred as it is easy to manufacture. However, other forms can be used as well. In a preferred embodiment, the microresonators can have a hollow shape, in particular a cylindrical hollow shape, so that each microresonator having a hollow shape provides an inner wall and an outer wall. Consequently, the total surface size is enlarged without enlarging the diameter of the microresonators. Having a higher surface size enables to let more of the biological agent to be analyzed adheres on the microresonator's surface so that the change in the spectrum is amplified and can detected more easy. Considered from another view, it is possible to identify or detect a specific biological agent in a multi-agent compound even if the concentration of said biological agent is very low. Thus, measurement range is enlarged.

In a preferred further development of the optical microsensor the microresonators are doped by fluorescent particles. They form quantum dots amplifying the light inside the microresonators. Thus, the quality of the microsensor is enhanced. Doping the microresonators can be achieved by mixing the fluorescent particles into the photosensitive polymer prior to the additive manufacturing, in particular prior to the laser writing.

In another preferred further development of the optical microsensor each sensor cell comprises a plurality of microresonators aligned in at least one row. A row is an example of a very simple predefined ordered arrangement of the microresonators. This arrangement is useful for evanescently coupling the light into the several passive resonators simultaneously. Furthermore, a better flow of biological solution in the fluidic cell is possible to achieve.

Preferably, the outer surface of each microresonator is or can be coated with a coupling agent to which the biological agent is able to couple with. Thus, one aspect of the manufacturing method is coating the outer surface of the microresonators with a coupling agent to which the biological agent is able to couple with.

According to an aspect of the present invention, an arrangement of an optical sensor according to present invention and a computer system is proposed comprising at least one machine learning algorithm for parameter identification and nature interpretation of biological agents.

Preferably, interpretation of the characteristics of the biological agent and/ or identification of the biological agent is effected using spectral changes of whispering gallery modes and/ or changes of a fluorescence spectrum that are characteristic for the individual biological agent to be identified.

The optical microsensor according to the present invention can be used in connection with a variety of different ways of biochemical analysis. For example, a method of use is proposed wherein a label-free biological agent detection technique or a labelled biological agent detection technique is applied for identification and nature interpretation of the biological agent in a multi-agent compound.

Further features and advantageous developments of the optical microsensor, its method of manufacturing as well as the method of use of said microsensor is now described in relation to several exemplary embodiments and with respect to the accompanying figures. Here,
- Fig. 1: shows an optical microsensor comprising sensor cell according to the state of the art.
- Fig. 2: shows the cross section through a sensor cell and spherical microresonator according to the state of the art.
- Fig. 3: shows a setup for adhesive layer formation inside the wells
- Fig. 4: shows an optical microsensor comprising sensor cell according to the present invention.
- Fig. 5: shows the cross section through a sensor cell and hollow-cylindrical microresonator according to the present invention.
- Fig. 6: shows a setup for a passive resonator sensing approach
- Fig. 7: shows a setup for an active resonator sensing approach
- Fig. 8: shows a flowchart for a first method of functionalization
- Fig. 9: shows a flowchart for a second method of functionalization
- Fig. 10: shows a flowchart for a first method of use of the microsensor
- Fig. 11: shows a flowchart for a second method of use of the microsensor
- Fig. 12: shows a flowchart for a third method of use of the microsensor
- Fig. 13: shows an overall overview of the process steps of the method according to the invention

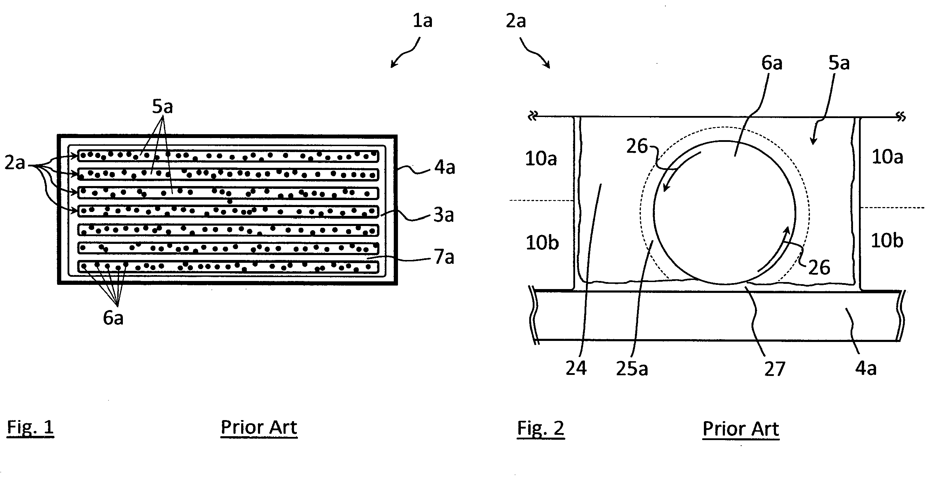

In order to produce a prototype sensor array 1a of whispering gallery mode (WGM) sensor cells 2a inventors used a 3D printing technique to design a frame structure 3a. The frame structure 3a is made of a polymer and contains various number of wells 5a inside which spherical WGM resonators 6a are placed, thus forming sensor cells 2a that are separated from each other as depicted in Fig. 1. A sufficient separation of the sensor cells 2a is a crucial factor in order to individualize single cells 2a, and their sensitivity respectively, obtainable via functionalization as described below.

A 3D printer of whatever company is the cheapest and the simplest way for the generation the frame structure 3a can be used, e.g. RepRap X400 and Leapfrog Creatr HS printers were used for the first prototype structure production. Both 3D printers are able to print structures of different types of materials that have to be insoluble in possible solutions to analyze (e.g. water or a buffer solution like Phosphate-buffered saline (PBS)). Acrylonitrile butadiene styrene (ABS) has been chosen for the prototype frame structure 3a construction.

A virtual structure-model for the frame structure 3a of the prototype sensor array 1a was prepared in a stereolithography file format in a stereo lithography CAD software. Then additional software packages may be used in order to slice the prepared model into layers and create a so called g-code file that was sent to the 3D printer. Both 3D printers use an additive manufacturing technique called Fused Filament Fabrication to build up the frame structure 7a layer by layer and to deposit the polymer material in such layers 10a, 10b, as depicted in Fig. 2. Here, a plastic filament is unwound from a coil and supplies material to produce the layers 10a, 10b. In order to get a frame structure 3a that is sufficient to confine WGM resonators 6a in cellular structures, several polymer layers 10a, 10b have been extruded on the surface of a substrate 4a, e.g. a thick glass plate, wherein wells 5a are formed by leaving certain areas on the substrate 4a free of polymer material providing the frame structure 3a.

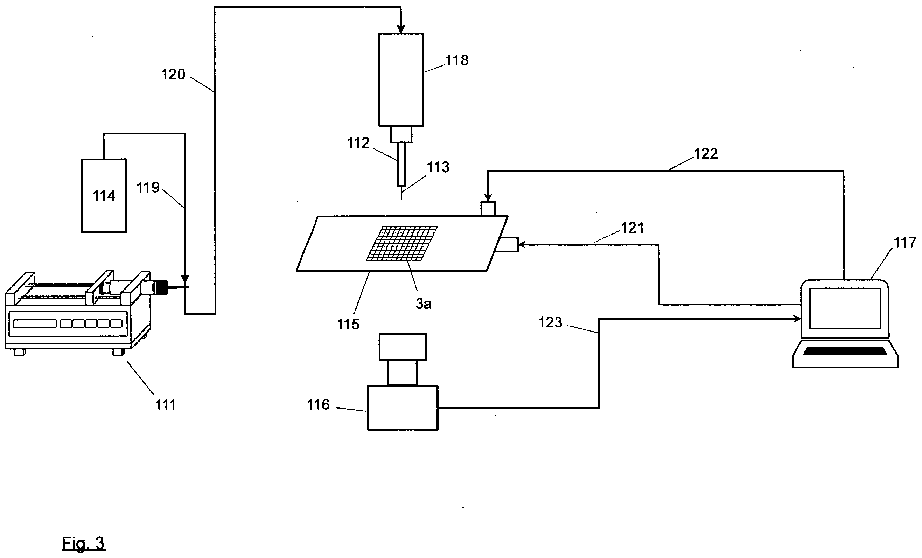

Each well 5a has a longitudinal extension wherein in Fig. 1 seven of such wells 5a are arranged in parallel. As soon as the production of polymer frame structure 3a on the glass substrate 4a is completed, the resonators 6a can be introduced into the wells 5a. For that an additional adhesive layer 27 is provided inside of each well 5a of the structure 3a as indicated in Fig. 2. This is effected using an adhesive solution to be placed selectively within the individual wells 5a. For that, a setup as depicted in Fig. 3 was developed.

The setup comprises a digital syringe pump 111 used to achieve an appropriate flow speed of adhesive provided in a container 114. This speed can easily be calculated and tuned, since the required volume of adhesive inside each cell 2a is known. This is predetermined in order to provide conditions for enabling the coupling of laser light inside the microsphere 6a via evanescent field propagation. The container 114, e.g. a container with a solution of MY133-MC (MY Polymers Ltd.) with predefined concentration is connected via supply pipe 119 to one side to fill the syringe pump 111.

A Needle 112 with a fused silica capillary tube 113 introduced inside the needle 112 is used to discharge the adhesive, the tube 113 having an inner diameter comparable to the cell size, e.g. approx. 100 µm. The silica capillary tube 113 has been fixed to the needle 112 with instant adhesive to avoid leaking of solution outside the system. The needle 112 is part of an injector 118 which is directly connected with the digital syringe pump 111 via a flexible supply pipe 120.

The substrate 4a comprising the printed polymer frame structure 3a is fixed on a motion stage 115. A computer 117 controls the motion stage 115 by sending control signals for XY-positioning over X-axis motion control link 121 and Y-axis motion control link 122 respectively, at specific time points to change the XY-position of the motion stage 115 in relation to the fused silica tubing 113. The XY position is chosen so that the tip of the fused silica tubing 113 is exactly above the center of one of the wells 5a to introduce adhesive. Then, the syringe pump 111 is activated pumping a specified amount of adhesive to the injector 118.

Repetition of this process after a chosen time period for each cell 2a in the structure 3a is performed leading to continuous filling of the wells 5a with an appropriate adhesive volume. The described process is optically controlled via a digital camera 116 connected to the computer 117 via data link 123. In order to smooth the adhesive layer 27 inside the wells 5a it is useful to utilize a compact spin-coater system. Spin-coating parameters can be adjusted experimentally.

After all wells 5a are filled with the adhesive 27, spherical WGM resonators 6a can be superimposed on the surface of the adhesive layer 27 and then be fixed just by this layer 27. The resonators 6a have a mean diameter of approximately 100 µm. To smooth the adhesive layer 27 spin-coating was performed, e.g. in two steps: the first step with 15 s at 2000 rpm; the second step with 60 s at 6000 rpm. Then, a final drying procedure by free solvent evaporation takes place and lasts, e.g. for 12 hours. All resonators 6a that did not fall into the wells 5a, are washed away, since there is no adhesive 27 outside the wells 5a. A major portion of the resonator's 6a surface is free of adhesive and can get in contact with the solution to be analyzed containing the biological agent to be interpreted. This portion can react to environmental variations, in particular to changes in optical path length.

The proposed technique is very cheap and simple. However, as indicated in Fig. 1 there is a significant disorder in the resonator's position within the wells 5a. Each well 5a contains a different amount of WGM resonators 6b and they are arbitrarily distributed. Such disorder in arrangement and number of resonators 6a has the disadvantage that the optical properties of the optical microsensor 1a vary from cell 2a to cell 2a.

To resolve the disordering, spherical resonators 6a can be imputed via extraction through a silica capillary tube 113 (fused silica tubing) with an inner diameter comparable to the outer diameter of resonators 6a, i.e. the microspheres, using an arrangement similar to that shown in Fig. 3. Here, ordering of the resonator's positions, in particular in that they are located in the middle of the wells 5a and in that they are arranged equidistantly, is ensured by exact positioning of the substrate by means of the motion stage 115 for positioning the substrate 4a so that a well 5a is located directly below the tube 113. A digital syringe pump 111 supplies the microspheres to the tube 113. The XY-position motion stage 115 is again controlled by a computer 117 via X-axis motion control link 121 and Y-axis motion control link 122. The spherical resonators 6a are individually provided by the silica capillary tube 113 to the surface of the frame structure 3a. In order to get the resonators 6a placed inside the wells at specific locations, the motion stage 115 positioned the frame structure 3a in that said specific position is directly below the silica capillary tube 113. Said measure leads to a much better order of the spherical microresonators than depicted in Fig. 1.

The WGM resonators 6a in the array structure 3a, as well as in frame structure 3b according to the present invention described later on, can have either a non-modified structure leading to a passive resonator or a modified inner structure, leading to an active resonator. A resonator's activation can be achieved using quantum dots (QDs). The inventors firstly tested such QDs on spherical PMMA (Polymethylmethacrylat) resonators. Cadmium-Tellurium (CdTe) hydrophilic quantum dots emitting with a central wavelength λ = 620±5 nm have been used for incorporation. A continuous wave (CW) operating Nd:YAG laser with doubled frequency resulting in a wavelength of 532 nm has been used as a pumping source. At a low pumping power level (below the lasing threshold) with 1 s exposure time only fluorescence is detectable (Q-factor is in the range of 10⁴, limited by the spectrometer resolution). Additional lasing ability has been proven by utilizing high (above lasing threshold) power of the same pumping source in combination with low (in pilot tests 0.01s) exposure times.

Fused silica resonators are more preferable for biosensing purposes, since, as observed in experiments, the resonance conditions in PMMA resonators are varying in time under the same environmental conditions, which results in a long-term spectral shift of WGM optical resonance maxima. Consequently, it might be difficult to determine the specific biomolecule influence on the WGM optical resonance spectrum. Therefore, the QDs' (central wavelength λ = 610±5 nm) activation of silica resonators has also been investigated according to the method explained in the following.

The modification technique for sensors with QDs depends on the resonator material. Resonators 6a commonly used for sensing biological agents are made out of polymers, first of all out of PMMA, or fused silica.

Injection of single color QDs into the PMMA sensor can be performed (via passive absorption) by mixing hydrophilic QDs diluted in a water solution with resonators in an ethanol, butanol or similar solution. The concentration of QDs may differ for various purposes. For example, two parts of ethanol for one part of 0.1 pM/ml QDs in the water solution may be used. The obtained mixture should be centrifuged and continuously stirred until almost no QDs are left in the solution. This can simply be proved by transparency comparison of the obtained mixture and hydrophilic QDs solution. Centrifugation time influences the homogeneity of QD's distribution on the resonator's surface, therefore the whole mixture is preferably to centrifuge until most part of QDs are absorbed by the resonator.

For example, the solution can be kept on the centrifuge for 12 minutes. After that, sensors need to be irrigated several times with ethanol/isopropanol solution and surpluses of solution need to be removed. Finally, a part of the residual ethanol solution with resonators is kept at room temperature for drying procedure, after which QDs imputed resonators are ready for sensing purposes.

The injection of single color QDs into fused silica WGM resonators is a more sophisticated process compared to the same process for polymer resonators like PMMA. Upon reflux with Aminopropyltrimethoxysilane (APTMS), the silica surface is covalently bonded to aminopropylsilane moieties through O-Si linkages. As a result, silica sensors coated with amino-groups may be obtained and thus coupling with hydrophilic QDs, which are terminated with carboxyl-groups, can be achieved.

Passive adsorption is still to appear, but the coupling efficiency is by two orders of magnitude lower than active adsorption and is mainly dependent on quality of flushing.

Despite the simplicity of introduction of spherical resonators 6a inside the frame structure 3a, this approach has the disadvantage that adhesive layer's 27 thickness varies across the resonators 6a and cells 2a of the sensor 1a which still lead to varying optical properties across the cell array. Furthermore, the presence of adhesive on the polymer frame structure 3a can lead to fixation of resonators 6a on the intermediate walls 7a as they are rarely located in the middle of a well 5a. Another disadvantage of the approach is that the parameters of preformed spherical resonators 6a are not controlled and defective shape resonators may be present. In particular resonator's diameter, although expected to be approximately 100 µm, varies from 106 µm up to 125 µm. This leads to sensor parameters variance and complicate the data analysis.

Thus, to improve developed method of resonator based microarray sensor production, fixation of the microresonators should be effected without any adhesive and, additionally, resonators should be as identical as possible. This can be done using direct laser writing technology, in particular by means of two-photon polymerization (2PP or TPP) to manufacture the microresonators for the sensor array.

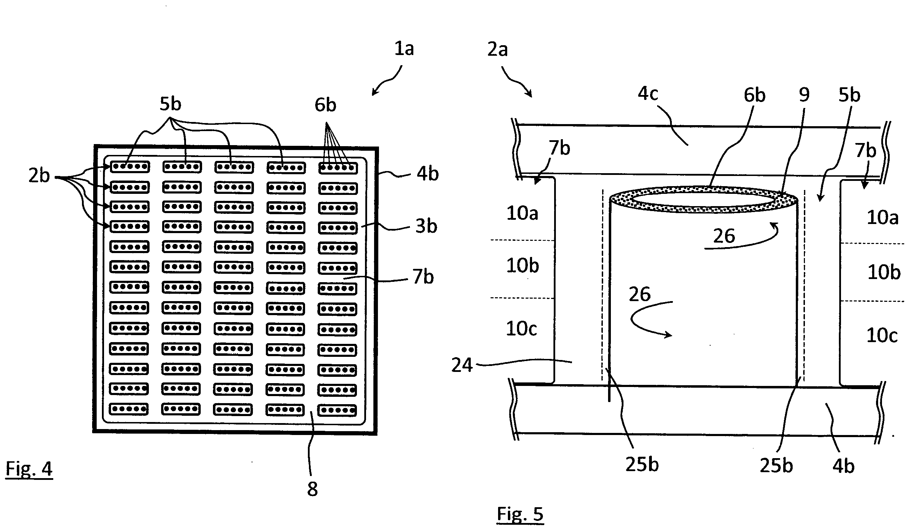

An optical microsensor 1b that is now according to the present invention, is shown in Fig. 4. Its frame structure 3b has a size 18x18 mm² and contains 65 cells 2b arranged like a matrix. The frame structure 3b consists of three layers 10a, 10b, 10c as can be seen in Fig. 5. The sensor cells 2b or wells 5b have a longitudinal extension, e.g. 750-1000µm, larger than their lateral extension, e.g. 150-250µm. The cells 2b are separated from each other from all sides with a height of more than 200 µm polymer. The separation is obtained on one hand by intermediate walls 7b, having a longitudinal extension parallel to the longitudinal extension of the cells 2b and, on the other hand by side walls 8 extending perpendicular to the intermediate walls 7b. Each intermediate wall 7b separates a row of sensor cells 2b from the neighboring row of cells, and each side wall separates a column of sensor cells 2b from a neighboring column of sensor cells 2b.

Each cell 2b has been designed for imputing 8 to 10 WGM resonators 6b, for the sake of simplicity, only 5 of which are indicated in Fig. 4. All resonators have a predefined size and predefined shape and are placed at a predetermined position within the borders 7b, 8 of the respective cell 2b, and all resonators of a cell 2b are arranged in one row. However, in other embodiments, it is also possible to have resonators of different sizes and/ or different shapes within the same cell 2b. In yet another embodiment, it is possible that all resonators are identical within the same cell 2b but one first cell 2b may have resonators with a first sizes and shape, an another cell 2b may have resonators with a second size and shape, the first size being different to the second size and/ or the first shape being different to the second shape.

The height of the frame structure 3b of the optical microsensor 1b according to the present invention has been chosen to about 0.25 mm corresponding to the three layers 10a, 10b, 10c each of which having a height of approximately 80µm. The whole structure 3b has been printed on a substrate 4b formed by a cover glass of a size 20x20x0.14 mm³. Typical production time is up to 3 minutes for active printing and extra several tens of minutes for 3D printer preheating. After the production cycle the completed frame structure 3b needs to remain still and cool down otherwise the joining between cover glass 4b and printed frame structure 3b may be lost.

Main printing parameters have been chosen as following:
- level height —80 µm;
- first layer height — 80%;
- printing speed — 15 mm/s;
- nozzle temperature — 230°C;
- infill — 25%;
- top solid layers — 4.

As mentioned before, the microresonators 6b of the optical microsensor 1b are manufactured by direct laser writing. This has several advantages:
1. Possibility to construct structures of arbitrary form
2. Near-IR laser light insignificantly absorbed and scattered by photoresin and do not influence on the polymerization process. High peak power of femtosecond impulses lead to start two photon absorption, but do not lead to blistering of the polymer due to low average power.
3. No mask needed. Sample preparation time is reduced.
4. Lateral spatial resolution up to 120 nm precision and transversal resolution around 300 nm precision are achievable.

There is only one limitation to the possible WGM resonator shapes namely, it should be closed and circular in the light propagation direction 26 which is indicated in Fig. 2 with regard to the spherical microresonators according to the state of the art, and indicated in Fig. 5 with regard to a cylindrical microresonator according to the present invention. However, basically any another shape than a cylindrical shape may be chosen as well, e.g. sphere, massive cylinder or hollow cylinder, ring, toroid or bottle. Taking into account the fact that polymerized material for building a resonator 6b via 2PP technique needs contact with the substrate 4b, spherical microresonators are not appropriate for 2PP production.

For prototype production cylindrical shaped resonators have been designed having a diameter of 43 µm and a height of approximately 16.34 µm. One embodiment comprised massive cylinders as resonators' shape, another embodiment comprised hollow cylinders as depicted in Fig. 5 having a radial thickness of approximately 2,2 µm.

For WGM resonator 6b production, hybrid polymers Femtobond 4B, provided by LZH e.V., Germany, and Ormocomp, provided by MicroResist GmbH, Germany, were chosen. Both polymers, also called photoresin or simply "resin", or also called photoresist or simply "resist", have advantages and disadvantages:
- Femtobond 4B is an ultra-low shrinkage material that provides high matching level to the model for the polymerized object, but it can absorb single photons with the wavelength up to 600 nm.
- Volume shrinkage of Ormocomp resin may be up to 7% while photo resin light processing and up to 2% while subsequent hardbake processing, and light absorbing efficiency is by orders of magnitude lower compared to Femtobond 4B. On the other hand, Ormocomp can absorb single photons only up to 450 nm wavelength.

Preferably, pure photoresins were used for passive resonator production. For active resonators 6b production that are doped with quantum dots 9 as depicted in Fig. 5, the photoresins mixed with a quantum dots (QD) solution were used. The following method steps have been used to archive a homogeneous distribution of hydrophobic QDs in the photosensitive resin.

Pure CdSe/ZnS QDs, as supplied by the manufacturer in the original package, need to be diluted with chloroform. The solution obtained needs to be transferred with the pipette into graduated tube and again diluted with chloroform to reduce a QDs concentration. Concentration of 2 mg of pure QDs per 1 ml of chloroform has shown good results. The hydrophobic QDs are dissolved in chloroform with a pre-polymer which is previously mixed with a photoinitiator and stabilizing agent. Concentration of both components can be changed to obtain better shape accuracy. Since inorganicorganic hybrid resins are soluble in common solvents, e.g. chloroform, QDs solution has been mixed with either Ormocomp or Femtobond in 0.1 proportion. Then, the respective QD mixed photoresist was placed on a hot plate magnetic stirrer for three hours at room temperature. Finally, obtained solution was treated with an ultrasonic tip (Sonics Virba-cell 225 W) at 20% of power for 10 minutes. In order to increase concentration of QDs inside the manufactured resonator and ensure chemical bond between QDs and polymer, hydrophobic QDs may be processed with methoxy polyethylene glycol (PEG) thiol solution prior to mixing with pre-polymer.

Before starting 2PP process, photoresin samples have been prepared in several steps depending on its type according to the processing guidelines proposed by the resin manufacturers.

Initially, substrate 4b need to be cleaned from impurities and moistures for sufficient resin adhesion on the substrate 4b. The substrate 4b is a simple cover glass usually used for analyzing biological samples under the microscope. For example, intensive acetone washing and/ or a bake process at 200 °C for 5 min is/ are suitable.

Then, the developed frame structure 3b is printed on the substrate 4b. After that, drops of photoresist are placed on the glass substrate 4b inside the wells 5b. In case of using Femtobond 4B as photoresist, Femtobond 4B samples are kept at room temperature for ca. 24 hours. In case of using Ormocomp as photoresist, Ormocomp samples are baked on a hot plate at 95 °C for 2 min (so-called pre-bake stage) to evaporate the solvent and to increase the film homogeneity. After that, substrate 4b, frame structure 3b and preprocessed photoresist is ready for direct laser writing, and substrate 4b can be fixed on a holder.

Light intensity, which may be absorbed by the resin, is dependent on travel speed of the focused light point and the power concentrated in the focal point, thus on average power of light source and focal point size. The photoresist is now irradiated with laser light precisely at specific locations in order to produce structures in the photoresist that form the desired resonators 6b. Here, the following parameters can be used: 18mW average power and 1 m/s travel speed for passive resonators or 13 mW, 0.2 m/s for active resonators 6b.

After the structuring process has completed, the samples need to be further processed in order to remove the non-irradiated photoresin. For that, Ormocomp samples are firstly baked at 95 °C for 5 min (post-bake phase), then wet-chemical etching is performed. Developer OrmoDev provided by MicroResist GmbH, Germany, can be used. Femtobond 4B samples don't need a further baking step. They should be kept in a developer for 45-50 min. For Ormocomp, in contrast, only 15-25 min in the developer are needed to remove unpolymerized resin.

The inventors use direct laser writing to manufacture sensor cells 2b having passive massive cylinder resonators, and to manufacture sensor cells 2b having active hollow cylinder resonators 6b as shown in Fig. 5. The resonators 6b in a cell 2b are arranged in line, i.e. ordered in one row as indicated in Fig. 4. However, more than one row, e.g. two rows is/ are also possible, wherein the rows are then arranged in parallel.

Light coupling mechanism for the microsensor 1b depends on the type of resonator 6b used, i.e. either passive or active resonators. Evanescent light coupling using a tapered optical fiber is most efficient one, however, requires a nanometer-precision for fiber positioning. This technique is difficult to apply and poorly expandable to a microsensor 1b having an array of sensor cells 2b. Prism-based coupling mechanism provides a better mechanical stability, which is an important factor for further analysis flow. This approach also enables parallel light coupling for several microcavities and therefore more appropriate for microsensor 1b.

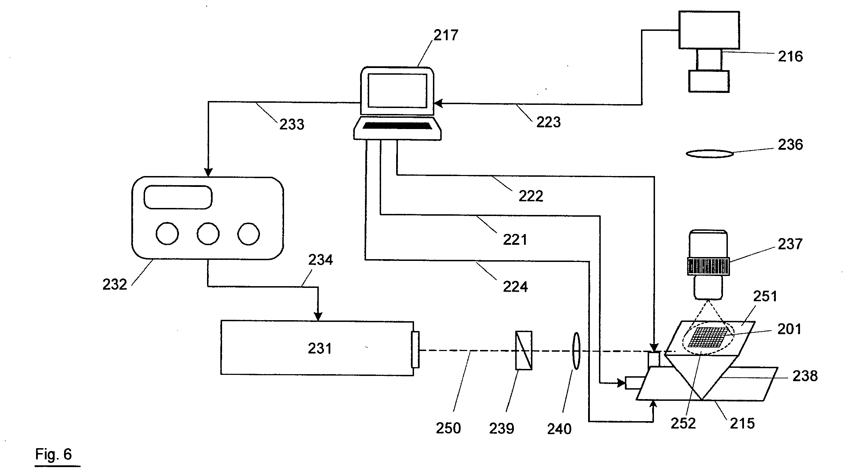

For an optical microsensor 1b/ sensor array 201 comprising passive resonators 6b a sensing approach as shown in Fig. 6 can be utilized. Here, a tunable laser system 231, 232, comprising laser controller 232 and laser source 231 is used which exhibits a comparably narrow spectral width. The laser controller 232 controls laser source 231 via laser controller link 234.

The laser wavelength should repeatedly change in a spectral range less than free spectral range of resonator at relatively low scanning speed (approx. 0.1 nm/s). If the frequency of the tunable laser 231 corresponds to the resonance frequency, the power of the light scattered by the resonators 6b increases and a spectral maximum indicating the WGM spectral position is recorded. The laser beam 250 is sharply focused on a certain cell 2b by means of a focusing system 240 following a polarization filter 239. The optical microsensor 1b/ sensor array 201 is fixed on top of a prism 238 that is in turn fixedly connected to the motion stage 215. Then each resonator 6b of the chosen cell 2b is selected one after the other and independently processed by exact positioning of the microsensor 1b/ sensor array 201 and/ or the laser source 231 in that laser beam 250 is focused on one particular cell 2b illuminating all resonators 6b of that cell 2b, thus becoming an active cell 2a. Intensity variation of the scattered light following laser tuning by means of laser controller 232 is recorded after passing through an objective 237 by a monochromatic camera 216.

The camera 216 fixedly connected with one end of a focusing system 236 that carries the objective 237 at the opposing other end. The camera 216 captures an area 252 that comprise array 201. The camera 's 216 ability to select a region of interest allows to analyze one single resonator 6b out of the whole number of resonators 6b inside the selected cell 2b and thus to increase the capturing speed. Said ability may be implemented by software. The power of light scattered by the individual sensor 2b is measured as integrated on the frame area. The intensity after filtering, which is intended for noise reduction, was used as relative scattered intensity. The intensity variation following laser tuning, and thus WGM spectral position has to be recorded and integrated scattered energy of the measured signal for each wavelength will be evaluated.

A motion stage 215 controlled by computer 217 via X-Axis motion control link 221 and Y-axis motion control link 222 is used to switch to another cell 2b of the optical microsensor 1b for further analysis. The motion stage 215 is also able to move the optical microsensor 1b in Z-axis direction via Z-axis motion control link 224. The complete analysis process is fully automated and can be controlled by the computer 217. For that, camera 216 delivers picture data of the scattered light intensity to computer 217 via data link. The computer 217, on one hand, controls XYZ position of the motion stage 215 and the sensor array 201 respectively and that, on the other hand, controls laser controller 232 via controller link 233 for activation and deactivation as well as for tuning of the laser source.

Environmental condition changes in the cell array 201 influence the WGM spectral properties of each resonator 6b inside the active cell 2a. Variations of the outer conditions can be determined via analyzing the corresponding relative changes of the resonance spectrum.

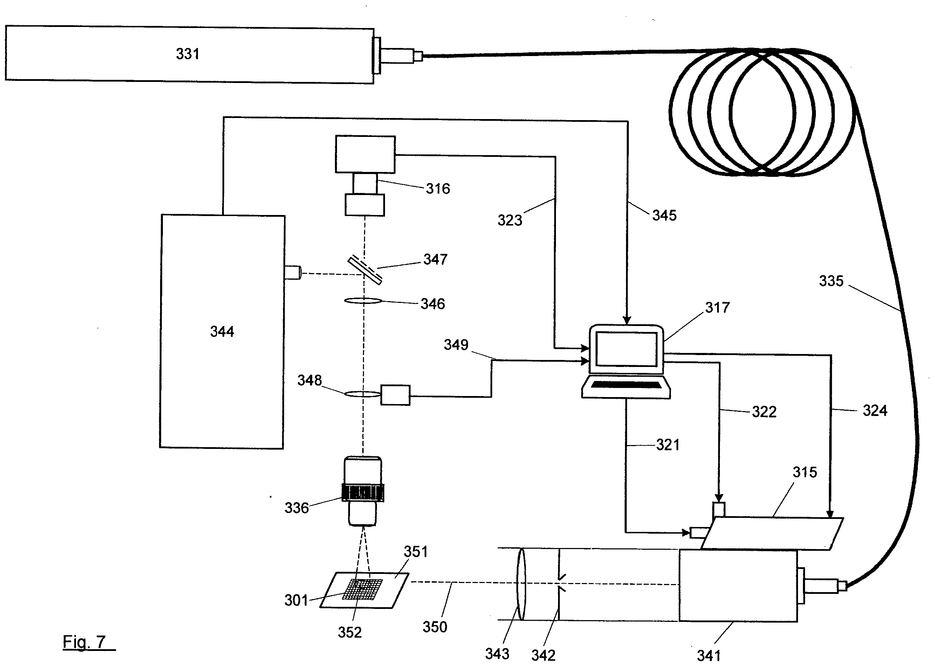

For an optical microsensor 1b/ sensor array 301 comprising active resonators 6b a sensing approach as shown in Fig. 7 can be utilized applying light coupling effected by optical pumping via free-space wave. Activation of the resonators 6b is effected by a modification of their internal structure with light emitting components (QDs). Thus, the sensing approach can be qualitatively changed. An introduction of quantum dots (QD) inside the resonators 6b leads to fluorescence of each sensor cell 2b in a broad spectral range containing many WGM resonance peaks. By setting the pumping power above the lasing threshold, the lasing process from the resonator 6b is observable. The discussed technique does not require a tunable laser, however a high-resolution spectrometer 344 is needed for data acquisition.

In order to analyze biomolecular changes in the environment, the setup as depicted in Fig. 7 was used comprising an optical microsensor 1b/ sensor array 301 with resonators 6b activated by QDs for obtaining self-fluorescence in the resonators 6b. The setup further comprises a high power light source 331 emitting in the absorption range of the selected QDs. The light source 331 can be e.g. a Nd:YAG laser, with λ=532 nm, or a laser diode or even high power light emitting diode (LED).

Laser operation type can be both in continuous wave mode (CW) for fluorescence analysis, or in pulsed mode for lasing peaks analysis. Use of pulsed mode operating laser 331 in the setup leads to a resonance peak Q-factor increase and thus the sensitivity increases. The light source 331 is connected to one end of a light guiding device 335 that can be for example, a fiber for easy and flexible setup. The other end of the light guiding device 335 is connected to a collimator 341 that is fixed to a motion stage 315 the XYZ position of which is adjustable by means of computer 317. Computer 317 controls the motion stage 315 via X-axis control link 321 and Y-axis control link 322. A Z-axis control link is also present but omitted here. The motion system 315 is used for changing the focus area of the laser light 350 on the surface of the cell array 301 to effect cell 2a selection. The incidence angle of pump source light may be varied by the motion stage 315.

Laser light 350 coming from collimator 341 firstly enters an iris diaphragm 342 followed by a focusing system 343. Movement of the collimator 341 by motion stage 315 is performed relative to focusing system 343 and iris diaphragm 342.

Sensor array 301 is placed on a table 351 at predefined position within a capturing area 352 of a microscope objective 336. The microscope objective 336 collects sensor's fluorescence light that is then provided to the spectrometer 344 by means of a focusing system 346 behind the microscope tube 336 followed by a beam divider 347 that divides the collected light into a first portion travelling to the spectrometer 344. A second portion of the light travels from beam divider 347 through a changeable filter 348 to color camera 316 that captures the collected light. The spectrometer 344, camera 316 and filter 348 are connected to computer 317 for providing current data via data links 323, 345, 349. Filter 348 is to filter out the excitation light of laser 331.

Before using the optical microsensor 1b/ sensor array 201, 301 according to the invention in a setup like those shown in Fig. 6 or Fig. 7 to analyze biological samples, there is the need to prepare the optical microsensor 1b. Normally, for analysis, there is provided any sample containing one or more unknown biological agents, i.e. any unknown biomolecule, like an amino acid or a protein. Here, in a single agent containing sample, the task can be to identify said single biological agent by interpretation of its parameters and, consequently, its nature. In best case, the single biological agent can be exactly identified either in a positive testing (it is biomolecule X) or a negative testing (it is not biomolecule A and not biomolecule B and not biomolecule C etc. thus, it must be biomolecule X). In a multi-agent containing sample, the task can be to identify how many different biological agents are contained, or which biomolecule or class of biomolecules is present or which is not, or if a particular biomolecule is present or not. The influence of each component in a multi-agent containing sample and the determination of the component specific nature of the sample may be analyzed in several steps. Different techniques can be applied as described hereinafter.

The method of applying the microsensor 1b basically comprises the following steps:

### First step: Functionalization of cells 2b

The functionalization of sensor cells 2b can be performed by coating resonator's 6b surface with a special coupling agent providing some kind of host station for the biological agent to be analyzed or identified. Said coupling may be effected by the biological agent itself so that the biological agent directly couples to the coupling agent, or it may be effected by a second coupling agent bound to the biological agent so that the biological agent couples to the first coupling agent at the resonator's 6b surface by means of the second coupling agent. Here the first and second coupling agent interact. In the first case, the biological agent is not labelled (non-labelled biological agent), in the latter case the biological agent is labelled (labelled biological agent). As coating for the resonators 6b biotin or streptavidin can be used. The second coupling agent may then be streptavidin or biotin so that streptavidin-biotin or biotin-streptavidin couplings will result. For these two coupling agents relative spectral changes can be detected.

In one embodiment, all cells 2b of the microsensor 1b can be identically functionalized. However, in another embodiment, different cells 2b may be functionalized differently.

### Second step: Functionalization verification/ An interaction analysis

An interaction analysis between resonators 6b and coupling biological agent during functionalization procedure should be performed to verify successfulness of functionalization. This step is, however, not necessary if successful functionalization is ensured. Reliable temporal WGM spectral or fluorescence intensity changes may characterize the functionalization successfulness.

### Third step: Multicomponent mixture analysis/ An interaction analysis

Data analysis is performed from the complete microsensor 1b/ sensor array 1b, 201 301 interacting with multicomponent mixture. Data analysis procedure is based on spectral change comparison and performed applying machine learning technologies choice of which depends on the type of biomedical analyte.

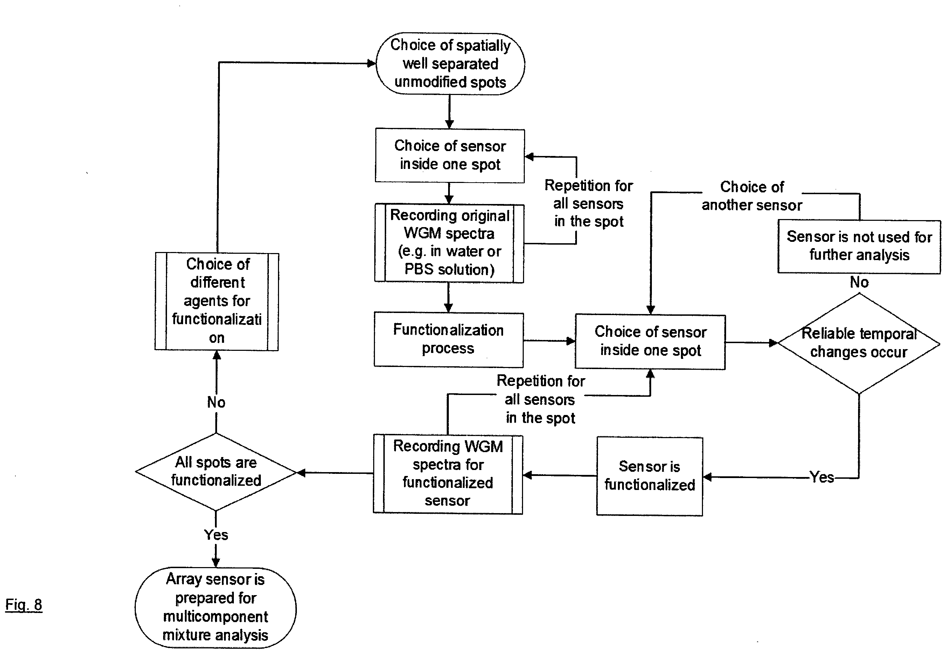

The individual steps are now explained in more detail with reference to the accompanying flowcharts in Fig. 8 to 12.

A validation of the success of the functionalization can be performed using several techniques. According to a first approach, using a known unlabeled component, the functionalization can be proven and qualitatively characterized via analyzing WGM spectral changes for various passive WGM-resonators in identically functionalized spots.

Spots need to be spatially separated far enough from each other to reduce the influence of background noise. Each spot should also contain many resonators in order to increase the sensing accuracy. As a first step, the original resonance spectrum (either in water or buffer solution, e.g. PBS) for all resonators in predefined spots with the same function (identically functionalized) should be saved. Later, the functionalization by appropriate selected agent is being performed and temporal changes are being analyzed. The success of the functionalization process can be confirmed when significant temporal spectral changes occur. After the functionalization process is completed (usually approx. 1 hour), intense flushing is necessary to remove all unbound agents. Later, spectra (in water or buffer solution, identical to the one used to obtain the original spectrum) for all sensors in identical spots are being recorded and are further used as reference spectra for sensing with functionalized resonators. This technique also operates well for active types of resonators. A flowchart of this technique is represented in Fig. 8.

Another approach for evaluating the success of functionalization and quality determination can be accomplished by utilizing QDs-conjugated biological components for passive WGM resonators functionalization. Like in the previous case, the spots need to be spatially separated. As a first step, the fluorescence intensity of the identical spots needs to be recorded (initially equal to the background noise of each spot). In case of using known QDs-conjugated biological components, the functionalization quality is verifiable via statistical analysis of fluorescence intensity of identically functionalized spots. Relatively higher fluorescence intensity characterizes better functionalization efficiency, lower — worse. Utilization of this approach is appropriate only for passive resonators, otherwise additional fluorescence or lasing coming out of active resonators will be observed. Fluorescence markers with high photostability, such as quantum dots, are to be used in order to label the biological agents.

Conjugation of biomedical components, such as proteins, amine terminated aptamers or even genes with carboxyl functionalized QDs, might be performed via reaction between sulfo-NHS (N-hydroxysulfosuccinimide sodium salt) and EDC (1-ethyl-3-(3-dimethylaminopropyl) carbodiimide hydrochloride). This reaction is completed with the formation of an amine bond between acid stabilized QDs and the primary amine groups of the proteins or amine terminated DNA parts.

Typical reaction parameters are the following:
- Preparation of the reaction mixture containing 0.05 mM hydrophilic QDs, 1.5-2.5 mg/mL of biological components, 5 mM of NHS, and 0.05 M of EDC in pH 7.0 PBS buffer.
- Keeping mixture at room temperature for 2-4 hours, then at 4°C overnight.
- Small amount of precipitate which might be formed and consist mainly of unconjugated QDs, needs to be removed by centrifugation.
- Ready-to-use solution is kept at 4°C.

By mixing QDs with amine terminated biological components without adding coupling reagents (EDC and NHS), no evidence of nonspecific binding might be observable. As a result, a solution of chosen QD-labelled known or unknown biological components is obtainable.

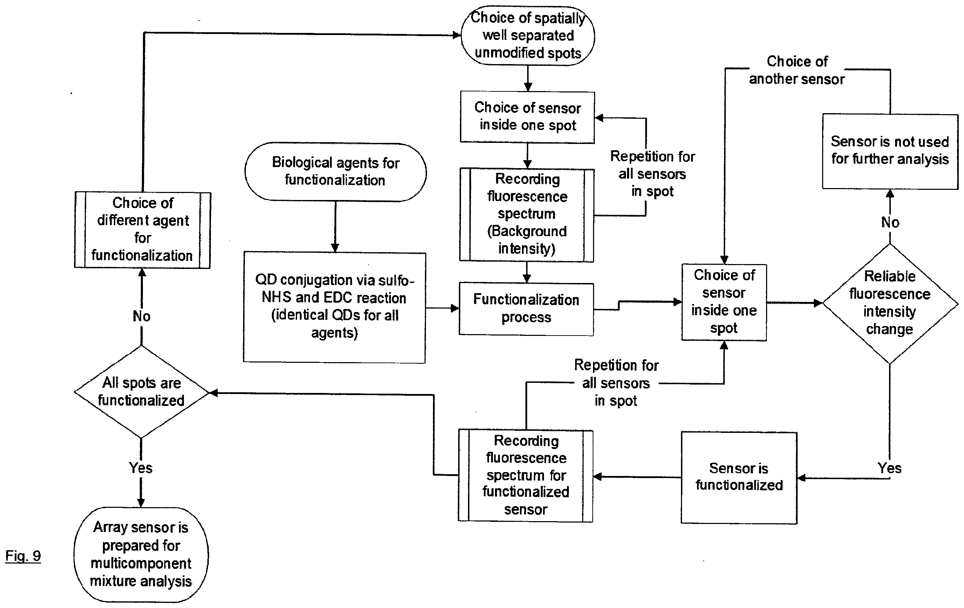

Due to statistical reasons both techniques require several (up to 6) cells 2b to be functionalized with the same biological component. Such identical cells 2b need to be far away from each other in order to reduce systematic errors. Resonators 6b in the differently functionalized cells 2b allow a further interaction analysis between components used for the functionalization and components under analysis (multicomponent solutions possible). A flowchart of this technique is represented in Fig. 9.

For the interaction between identically functionalized microresonators and the solution to be analyzed both the mixture of several QDs-conjugated biological components for analysis and the mixture of unconjugated biological components can be chosen. Either each component can be labelled with a specific QD-type or several groups of components can be formed and all agents in one group are labelled with the same QD-type (e.g. for an untreated mixture — QDs that exhibit a fluorescence peak around 570 nm and for a mixture after treatment — QDs with fluorescence peak around 620 nm). Again, several techniques are possible here:

In a first approach, if unlabeled components are used for functionalization and a mixture of unlabeled biological agents is used for further analysis, two data sets will be used: one for spectral changes for unmodified sensors caused by the agent under analysis, and a second for recording spectral changes for a functionalized resonator caused by agent under analysis.

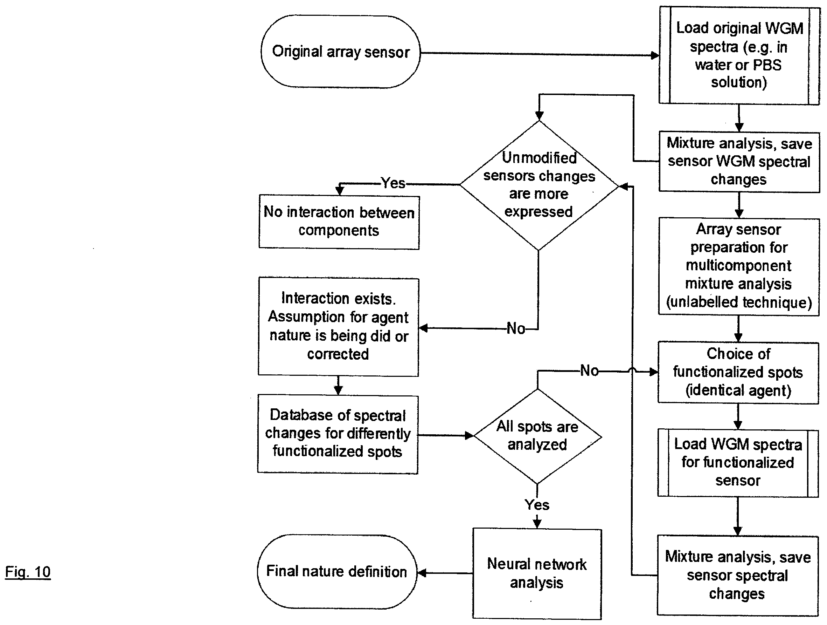

Before analyzing spectral changes, intense flushing is essential in order to remove all unbound components. If original spectral changes (usually caused by non-specific adsorption, can be considered as noise) are more significant in comparison to the functionalized one, then no significant interaction exists between agents under analysis and agent used for functionalization. This result can also indicate that a multicomponent solution under analysis does not contain any agent, which has the property to interact with the agent used for functionalization. If spectral changes for functionalized sensors are more significant, then the corresponding interaction exists and since the nature of agent used for functionalization is known, an assumption for the nature of the agent under analysis can be made. The most efficient way for this technique is, however, to use active resonators 6b. In order to analyze the nature of unknown biological agents diluted in the mixture, parameters of a neural network should be set on mixtures with a known list of components and their portions. A flowchart of this technique is represented in Fig. 10.

In a second approach, if unlabeled components are used for functionalization and a mixture of QDs-conjugated biological components is used for analyzing, components of the mixture which can interact with agents used for functionalization will bind to resonators in spots and via laser coupling inside resonators start to fluoresce. The analysis of spectral peaks in the fluorescence spectrum of each cell is subsequently performed. The existence of a characteristic spectral peak in the fluorescence spectrum of the cell means that the unknown biomedical component (which is characterized by this central frequency) can interact with one of the components used for the functionalization. As in the previous approach, intense flushing is essential to increase the accuracy of the whole analysis.

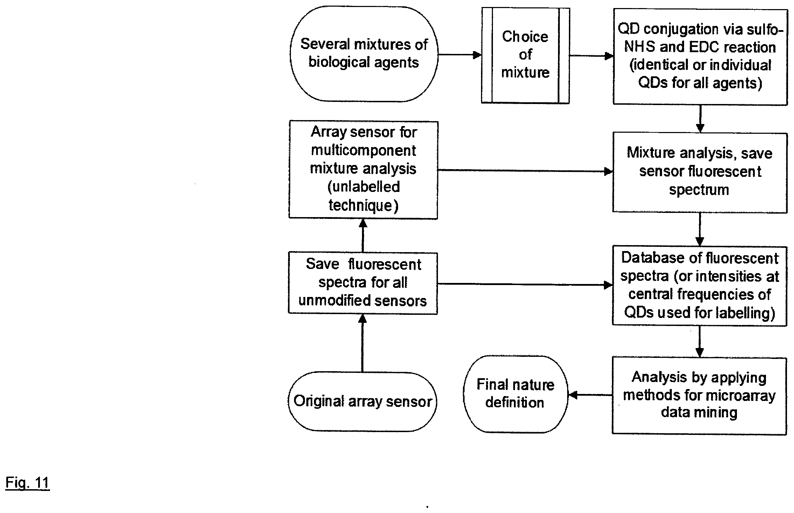

Sensor arrays 1b, 201, 301 containing an active type of resonators 6b in the cells 2b that are functionalized with unlabeled components by applying above mentioned interaction analysis are well applicable for DNA-or similar analysis, since there are only those components present, which can interact with one specific complementary component that can be used for functionalization. A flowchart of this technique is represented in Fig. 11.

Moreover, since resonators have a high quality (Q-) factor, spectral changes of WGM spectrum can be used as additional parameters in analysis for further nature definition and thus for increasing the accuracy of the sensing process.

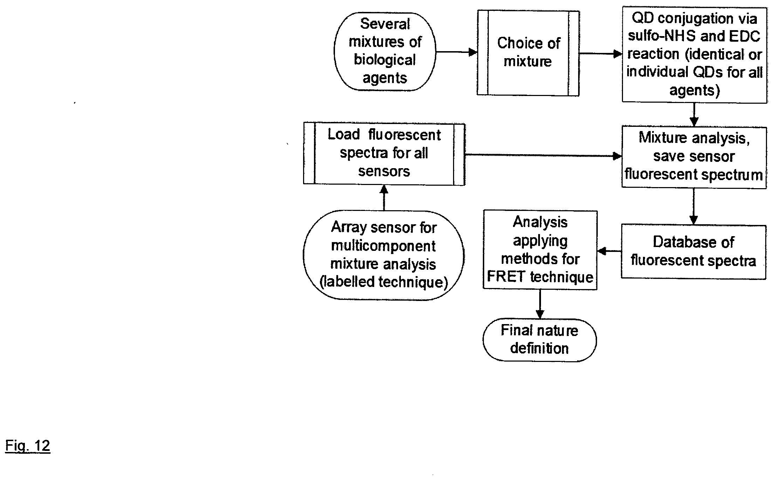

In a third approach, if labeled components are used for functionalization and agents under analysis are also labelled, then technique combining the WGM spectral changes analysis and FRET (Forster resonance energy transfer) technique is applicable. A flowchart of this technique is represented in Fig. 12. According to FRET technique, three different results can be obtained:
- No interaction between the components (only self-fluorescence of cells) accompanied with no WGM spectral changes.
- Strong interaction between components accompanied by energy transfer between fluorescence materials with different radiative energy and by significant WGM spectral changes.
- In case of not sufficient flushing or non-binding adsorption of agents under analysis on the sensor, an appearance of additional spectral peaks of almost equal intensity, corresponding to present components under analysis in fluorescence spectrum might be observed.

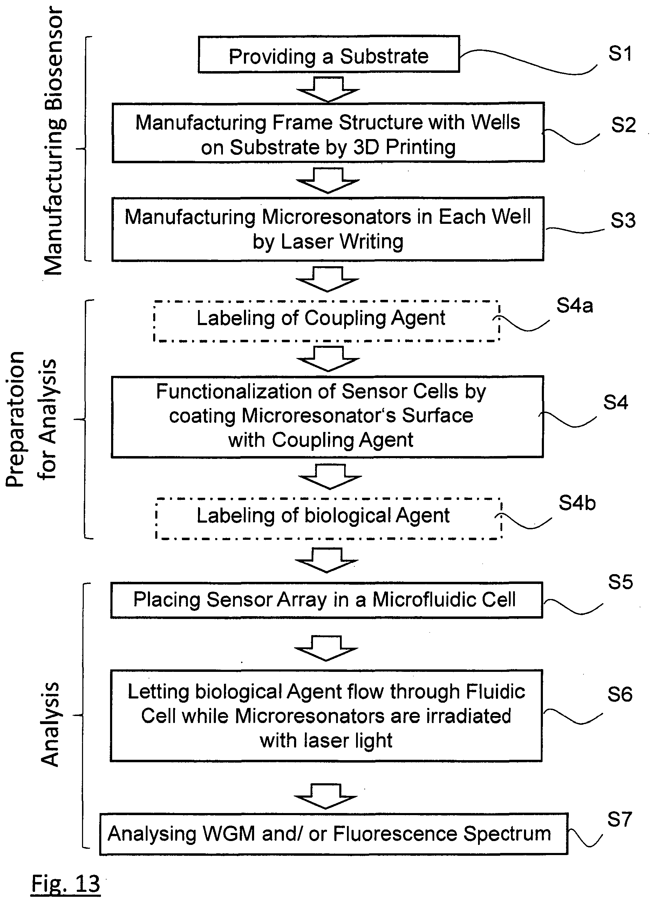

Fig. 13 depicts on overview of the steps in a method according to the present invention. Basically the individual steps may be grouped into manufacturing of the optical microsensor 1b (biosensor), Preparation of microsensor 1b for analysis and using the microsensor 1b for analyzing a solution containing any unknown biological agent.

For microsensor 1b manufacturing, as indicated by step S1, a substrate 4b is provided that may be a glass plate as previously described. On that substrate 4b, the frame structure 3b with matrix-like arranged wells 5b is manufactured by means of 3D printing, step S2. After that a photoresin is placed inside each well 5b individually and the microresonators 6b are generated by direct laser writing into the photoresin of each well 5b, so that the wells 5b becomes sensitive sensor cells 2b, step S3. Direct laser writing is performed by 2PP. Finally, the unpolymerized photoresin is washed away so that only the microresonators 6b remains in the wells 5b. Photoresin specific pre- and post- treatments are left out here, for the sake of simplicity.

For analysis, preparation of the resonators 6b is basically effected by coating microresonators' 6b surface with a coupling agent, step S4. This step S4 is also called functionalization. Said coupling agent may be labelled (marked) wherein labelling of coupling agent may be performed prior to functionalization, step S4a. Furthermore, also the biological agent under analysis may be labeled wherein labelling of biological agent may be performed prior to or after functionalization, step S4b. Steps S4a and S4b are optional.

With regard to analysis, microsensor 1b/ sensor arrays 201, 301 is then placed in microfluidic cell, step S5, in which the microsensor 1b/ sensor arrays 201, 301 is flushed with a solution containing the biological agent to be analyzed, step S6. Simultaneously, individual sensor cells 2b are irradiated by laser light one after the other. Flushing effects may provide a thermal stabilization for sensor cell 2b that may be significantly heated due to focused laser light (spot). Said solution may circulate through the microfluidic cell during analysis so that only a little amount of solution is needed.

Finally, the whispering gallery modes spectrum or fluorescence spectrum is analyzed, step S7, e.g. by means of camera and/or a spectrometer. Depending on a change in spectrum it can be determined if a certain biological agent is present in the solution or not. Here, a comparison of actual spectrum with a spectrum obtained before solution flows through the fluidic cell, or with one or more other pre-stored spectrums that are known to result from a specific biomolecule may be performed.

It should be understood that the particular methods to interpret nature of and to identify a biological agent are merely exemplary and are not intended to indicate that the described methods are the only ones to be used. The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated. The scope of the invention is only limited by the appended claims.

### List of Reference Numerals

- 1a, 1b: Optical Microsensor, Sensor array
- 2a, 2b: Sensor cells
- 3a, 3b: Frame Structure
- 4a, 4b: Substrate
- 4c: Cover Plate
- 5a, 5b: Well
- 6a, 6b: Microresonator
- 7a, 7b: Cell Borders, Intermediate Walls
- 8: Side Walls
- 9: Quantum Dots
- 10a, 10b, 10c: Frame Layer
- 24: Analysis Chamber
- 25a, 25b: Functionalization Layer
- 26: Light Circulating Path
- 27: Adhesive Layer, Adhesive
- 111: Digital Syringe Pump
- 112: Needle
- 113: Fused Silica Tubing
- 114: Container for Adhesive
- 115: Motion Stage for frame structure positioning
- 116: Camera
- 117: Computer
- 118: Injector
- 119: Supply pipe to syringe pump
- 120: Supply pipe to injector
- 121: X-axis motion control link
- 122: Y-axis motion control link
- 123: Camera-Computer Data link
- 201: Sensor Array
- 215: Motion Stage for sensor array positioning
- 216: Camera
- 217: Computer
- 221: X-axis motion control link
- 222: Y-axis motion control link
- 223: Camera-Computer Data link
- 224: Z-axis motion control link
- 231: Laser Source
- 232: Laser Controller
- 233: Computer-Laser Controller Link
- 234: Laser Controller Link
- 236: Focusing System
- 237: Objective
- 238: Prism
- 239: Polarization filter
- 240: Focusing system
- 250: Laser Beam
- 251: Upper Prism Surface
- 252: Capturing Area
- 301: Sensor Array
- 315: Motion Stage
- 316: Camera
- 317: Computer
- 321: X-axis motion control link
- 322: Y-axis motion control link
- 323: Camera-Computer link
- 324: Z-axis motion control link
- 335: Light Guiding fiber
- 336: Microscope Objective
- 341: Collimator
- 342: Iris diaphragm
- 343: Focusing system
- 344: Spectrometer
- 345: Computer-Spectrometer Communication link
- 346: Focusing system
- 347: Beam divider
- 348: Changeable Filter
- 349: Filter-Computer Communication Link
- 350: Laser Beam
- 351: Table
- 352: Capturing Area

## Claims

1. Optical microsensor (201, 301) for interpretation of characteristics of biological agents and for identification of a biological agent in a fluidic environment using spectral changes of whispering gallery modes and/ or changes of a fluorescence spectrum depending on the biological agent to be identified, the sensor (201, 301) comprising an array of sensor cells (2b) formed by a plurality of wells (5b) within a frame structure (3b) arranged on a glass substrate (4b), the frame structure (3b) being covered by a glass plate (4c) so that each sensor cell (2b) is bordered to every side, and each sensor cell (2b) comprising at least one optical microresonator (6b), **characterized in that** the microresonators (6b) each having a predetermined size, shape and position with regard to the cell borders (7a, 7b) of the respective well (5b) and **in that** the microresonators (6b) are additively manufactured from photosensitive polymer material.

2. Optical sensor (201, 301) according to claim 1, **characterized in that** the microresonators (6b) are made by direct laser writing the photosensitive polymer material, in particular by means of two photon polymerization.

3. Optical sensor (201, 301) according to claim 1 or 2, **characterized in that** the frame structure (3b) consists of one or more layers generated layer-wise on the substrate (4b) by means of an additive manufacturing technique wherein the wells (5b) are formed by leaving certain areas on the substrate (4b) free of material forming the frame structure (3b).

4. Optical sensor (201, 301) according to claim 3, **characterized in that** the frame structure (3b) is made of a fused polymer.

5. Optical sensor (201, 301) according to one of the foregoing claims, **characterized in that** the microresonators (6b) have a circular shape in the light propagation direction, in particular a hollow shape, preferably a cylindrical hollow shape.

6. Optical sensor (201, 301) according to one of the foregoing claims, **characterized in that** the microresonators (6b) are doped by fluorescent particles forming quantum dots (9).

7. Optical sensor (201, 301) according to one of the foregoing claims, **characterized in that** each sensor cell (2b) comprises a plurality of microresonators (6b) aligned in at least one row.

8. Optical sensor (201, 301) according to one of the foregoing claims, **characterized in that** the outer surface of each microresonator (6b) is coated with a coupling agent to which the biological agent is able to couple with.

9. Arrangement of an optical sensor (201, 301) according to one of the foregoing claims and a computer system, **characterized in that** the computer system comprising machine learning algorithms for parameter identification and nature interpretation of biological agents.

10. Method of manufacturing an optical sensor (201, 301) according to one of the claims 1 to 8, **characterized in that** the microresonators (6b) having a predetermined size and shape are each arranged at a predetermined position with regard to the cell borders (7a, 7b) of the respective well (5b) by means of additive manufacturing using photosensitive polymer material.

11. Method according to claim 10, **characterized by** manufacturing the microresonators (6b) by means of direct laser writing the photosensitive polymer material, in particular by means of two photon polymerization.

12. Method according to claim 11, **characterized by** generating the frame structure (3b) layer-wise on the substrate (4a) by means of an additive manufacturing technique, in particular by fusing a polymer filament, wherein the wells (5b) are formed by leaving certain areas on the substrate (4b) free of material forming the frame structure (3b).

13. Method according to one of the claim 10 to 12, **characterized by** mixing fluorescent particles forming quantum dots into the photosensitive polymer prior to additive manufacturing, in particular prior to laser writing.

14. Method according to one of the claims 10 to 13, **characterized by** coating the outer surface of the microresonators (6b) with a coupling agent to which the biological agent is able to couple with.

15. Method of use of the optical sensor (201, 301) according to one of the claims 1 to 8 for interpretation of characteristics of biological agents and for identification of a biological agent in a fluidic environment **characterized by** using changes of whispering gallery modes parameters and/ or changes of a fluorescence spectrum depending on the biological agent to be identified.

16. Method of use according to claim 15, **characterized in that** a label-free biological agent detection technique or a labelled biological agent detection technique is applied for identification and nature interpretation of the biological agent in a multi-agent compound.

## Patentansprüche

1. Optischer Mikrosensor (201, 301) zur Interpretation von Eigenschaften biologischer Wirkstoffe und zur Identifizierung eines biologischen Wirkstoffes in einer fluiden Umgebung anhand spektraler Veränderungen von, je nach zu identifizierendem biologischen Wirkstoff, Whispering-Gallery-Moden und/oder Veränderungen eines Fluoreszenzspektrums, wobei der Sensor (201, 301) eine Anordnung von Sensorzellen (2b) umfasst, die aus einer Mehrzahl von auf einem Glassubstrat (4b) angeordneten Kammern (5b) innerhalb einer Rahmenstruktur (3b) gebildet sind, wobei die Rahmenstruktur (3b) mit einer Glasplatte (4c) derart abgedeckt ist, dass jede Sensorzelle (2b) zu allen Seiten begrenzt ist, und wobei jede Sensorzelle (2b) mindestens einen optischen Mikroresonator (6b) umfasst, **dadurch gekennzeichnet, dass** jeder der Mikroresonatoren (6b) eine vorbestimmte Größe, Form und Position in Bezug auf die Zellengrenzen (7a, 7b) der entsprechenden Kammer (5b) hat, und dass die Mikroresonatoren (6b) aus photosensitivem Polymermaterial additiv gefertigt sind.

2. Optischer Sensor (201, 301) nach Anspruch 1, **dadurch gekennzeichnet, dass** die Mikroresonatoren (6b) mittels direktem Laserschreiben des photosensitiven Polymermaterials, insbesondere mittels Zwei-Photonen-Polymerisation, hergestellt sind.

3. Optischer Sensor (201, 301) nach Anspruch 1 oder 2, **dadurch gekennzeichnet, dass** die Rahmenstruktur (3b) aus einer oder mehreren Schichten besteht, die mittels einer additiven Fertigungstechnik schichtweise auf dem Substrat (4b) erzeugt sind, wobei die Kammern (5b) dadurch ausgebildet sind, dass bestimmte Bereiche auf dem Substrat (4b) frei von dem Material bleiben, das die Rahmenstruktur (3b) bildet.

4. Optischer Sensor (201, 301) nach Anspruch 3, **dadurch gekennzeichnet, dass** die Rahmenstruktur (3b) aus einem aufgeschmolzenen Polymer hergestellt ist.

5. Optischer Sensor (201, 301) nach einem der vorhergehenden Ansprüche, **dadurch gekennzeichnet, dass** die Mikroresonatoren (6b) in Richtung der Lichtausbreitung kreisförmig, insbesondere hohl, vorzugsweise hohlzylindrisch ausgebildet sind.

6. Optischer Sensor (201, 301) nach einem der vorhergehenden Ansprüche, **dadurch gekennzeichnet, dass** die Mikroresonatoren (6b) mit fluoreszierenden Partikeln dotiert sind, die Quantenpunkte (9) bilden.

7. Optischer Sensor (201, 301) nach einem der vorhergehenden Ansprüche, **dadurch gekennzeichnet, dass** jede Sensorzelle (2b) eine Mehrzahl von Mikroresonatoren (6b) umfasst, die zueinander in mindestens einer Reihe ausgerichtet sind.

8. Optischer Sensor (201, 301) nach einem der vorhergehenden Ansprüche, **dadurch gekennzeichnet, dass** die Außenfläche jedes Mikroresonators (6b) mit einem Kopplungswirkstoff beschichtet ist, an den der biologische Wirkstoff ankoppeln kann.

9. Anordnung eines optischen Sensors (201, 301) nach einem der vorhergehenden Ansprüche und eines Computersystems, **dadurch gekennzeichnet, dass** das Computersystem maschinelle Lernalgorithmen zur Parameteridentifikation und Interpretation der Beschaffenheit biologischer Wirkstoffe umfasst.

10. Verfahren zur Herstellung eines optischen Sensors (201, 301) nach einem der Ansprüche 1 bis 8, **dadurch gekennzeichnet, dass** die Mikroresonatoren (6b), die eine vorbestimmte Größe und Form haben, jeweils mittels additiver Fertigung unter Verwendung eines photosensitiven Polymermaterials an einer vorbestimmten Position in Bezug auf die Zellengrenzen (7a, 7b) der entsprechenden Kammer (5b) angeordnet sind.

11. Verfahren nach Anspruch 10, **dadurch gekennzeichnet, dass** die Mikroresonatoren (6b) mittels direktem Laserschreiben des photosensitiven Polymermaterials hergestellt werden, insbesondere mittels Zwei-Photonen-Polymerisation.

12. Verfahren nach Anspruch 11, **dadurch gekennzeichnet, dass** die Rahmenstruktur (3b) mittels einer additiven Fertigungstechnik schichtweise auf dem Substrat (4a) erzeugt wird, insbesondere durch Aufschmelzen eines Polymerfilaments, wobei die Kammern (5b) derart ausgebildet werden, dass bestimmte Bereiche auf dem Substrat (4b) von dem Material frei bleiben, das die Rahmenstruktur (3b) bildet.

13. Verfahren nach einem der Ansprüche 10 bis 12, **dadurch gekennzeichnet, dass** vor der additiven Fertigung, insbesondere vor dem Laserschreiben, fluoreszierende Partikel, die Quantenpunkte bilden, in das photosensitive Polymer gemischt werden.

14. Verfahren nach einem der Ansprüche 10 bis 13, **dadurch gekennzeichnet, dass** die Außenfläche der Mikroresonatoren (6b) mit einem Kopplungswirkstoff beschichtet wird, an den der biologische Wirkstoff ankoppeln kann.

15. Verwendung des optischen Sensors (201, 301) nach einem der Ansprüche 1 bis 8 zur Interpretation von Eigenschaften biologischer Wirkstoffe und zur Identifizierung eines biologischen Wirkstoffes in einer fluiden Umgebung, **dadurch gekennzeichnet, dass,** je nach zu identifizierendem biologischen Wirkstoff, Veränderungen der Parameter von Whispering-Gallery-Moden und/oder Veränderungen eines Fluoreszenzspektrums genutzt werden.

16. Verwendung nach Anspruch 15, **dadurch gekennzeichnet, dass** zur Identifizierung und Beschaffenheitsinterpretation des biologischen Wirkstoffes in einer Multi-Wirkstoff Zusammensetzung eine Marker-freie Technik zum Nachweis biologischer Wirkstoffe oder eine Marker-Basierte Technik zum Nachweis biologischer Wirkstoffe angewandt wird.

## Revendications

1. Microcapteur optique (201, 301) pour l'interprétation de caractéristiques d'agents biologiques et pour l'identification d'un agent biologique dans un environnement fluide à l'aide des variations spectrales de modes de chuchotement en galerie et/ou des variations d'un spectre de fluorescence en fonction de l'agent biologique à identifier, le capteur (201, 301) étant composé d'une série de cellules de capteur (2b) formées de plusieurs puits (5b) au sein d'une structure de trame (3b) disposée sur un substrat de verre (4b), la trame (3b) étant recouverte d'une plaque de verre (4c) pour que chaque cellule de capteur (2b) soit bordée de chaque côté, chaque cellule de capteur (2b) comprenant au moins un microrésonateur optique (6b), **caractérisé en ce que** chaque microrésonateur (6b) a une taille, une forme et une position prédéterminées par rapport aux bords de la cellule (7a, 7b) du puits respectif (5b) et que ce microrésonateur (6b) est fabriqué de façon additive à partir d'un matériau polymère photosensible.

2. Capteur optique (201, 301) selon la revendication 1, **caractérisé en ce que** les microrésonateurs (6b) sont fabriqués par écriture directe au laser du matériau polymère photosensible, en particulier au moyen de la polymérisation à deux photons.

3. Capteur optique (201, 301) selon la revendication 1 ou 2, **caractérisé en ce que** la trame (3b) est constituée d'au moins une couche générée sur le substrat (4b) au moyen d'une technique de fabrication additive dans laquelle les puits (5b) sont formés en vidant certaines zones du substrat (4b) du matériau de la trame (3b).

4. Capteur optique (201, 301) selon la revendication 3, **caractérisé en ce que** la trame (3b) est en polymère fondu.

5. Capteur optique (201, 301) selon l'une des revendications précédentes, **caractérisé en ce que** les microrésonateurs (6b) ont une forme circulaire dans la direction de propagation de la lumière, en particulier une forme creuse, de préférence une forme creuse cylindrique.

6. Capteur optique (201, 301) selon l'une des revendications précédentes, **caractérisé en ce que** les microrésonateurs (6b) sont dopés par des particules fluorescentes formant des points quantiques (9).

7. Capteur optique (201, 301) selon l'une des revendications précédentes, **caractérisé en ce que** chaque cellule de capteur (2b) comprend plusieurs microrésonateurs (6b) alignés sur au moins une rangée.

8. Capteur optique (201, 301) selon l'une des revendications précédentes, **caractérisé en ce que** la surface externe de chaque microrésonateur (6b) est revêtue d'un agent de couplage auquel l'agent biologique est capable de se coupler.

9. Assemblage d'un capteur optique (201, 301) selon l'une des revendications précédentes et d'un système informatique, **caractérisé en ce que** le système informatique héberge des algorithmes d'apprentissage automatique pour l'identification des paramètres et l'interprétation de la nature d'agent biologiques.

10. Procédé de fabrication d'un capteur optique (201, 301) selon l'une des revendications 1 à 8, **caractérisé en ce que** chacun des microrésonateurs (6b) de taille et de forme prédéterminés est disposé sur une position prédéterminés par rapport aux bords de la cellule (7a, 7b) du puits respectif (5b) au moyen d'une fabrication additive utilisant un matériau polymère photosensible.

11. Procédé selon la revendication 10, **caractérisé par** la fabrication des microrésonateurs (6b) par écriture directe au laser du matériau polymère photosensible, en particulier au moyen de la polymérisation à deux photons.

12. Procédé selon la revendication 11, **caractérisé par** la génération par couche d'une trame (3b) sur le substrat (4a) au moyen d'une technique de fabrication additive, en particulier par la fusion d'un filament polymère, dans laquelle les puits (5b) sont formés en vidant certaines zones du substrat (4b) du matériau de la trame (3b).

13. Procédé selon l'une des revendications 10 à 12, **caractérisé par** le mélange de particules fluorescentes formant des points quantiques dans le polymère photosensible avant la fabrication additive, en particulier avant l'écriture au laser.

14. Procédé selon l'une des revendications 10 à 13, **caractérisé par** le revêtement de la surface externe des microrésonateurs (6b) d'un agent de couplage auquel l'agent biologique est capable de se coupler.

15. Procédé d'utilisation du capteur optique (201, 301) selon l'une des revendications 1 à 8 pour l'interprétation des caractéristiques d'agents biologiques et pour l'identification d'un agent biologique dans un environnement fluide **caractérisé par** l'utilisation des variations spectrales de modes de chuchotement en galerie et/ou des variations d'un spectre de fluorescence en fonction de l'agent biologique à identifier.

16. Procédé d'utilisation selon la revendication 15, **caractérisé en ce qu'une** technique de détection d'agent biologique sans marqueur ou une technique de détection d'agent biologique marqué est appliquée pour l'identification et l'interprétation de la nature de l'agent biologique dans un composé multi-agent.
